# EUROPEAN PATENT APPLICATION

(11) **EP 2 602 438 A1**
(43) Date of publication of application: **12.06.2013**
(21) Application number: 11814629.9
(22) Date of filing: 02.08.2011
(51) Int. Cl.: F01D 19/00, F01D 17/00, F01K 23/10, F01N 5/02, F02G 5/02, F02G 5/04

(54) **POWER GENERATION PLANT FACILITIES AND METHOD FOR OPERATING SAME**

(30) Priority: 02.08.2010 JP 2010173720
(71) Applicant: Mitsubishi Heavy Industries, Ltd., Tokyo 108-8215 (JP)
(72) Inventor: ICHIKI, Yoshihiro, Tokyo 108-8215 (JP)
(74) Representative: HOFFMANN EITLE
(86) International application number: PCT/JP2011/067659
(87) International publication number: WO 2012/018004

(57) **Abstract**

Power-generation plant equipment (1) of the present invention is provided with a steam-flow-volume adjusting valve (20) that is provided in a superheated-steam pipe (30) on the upstream side of a steam turbine (7). During startup of the steam turbine (7), a controller of the power-generation plant equipment (1) increases a degree of opening of the steam-flow-volume adjusting valve (20) from a closed position, thus increasing the frequencies of the steam turbine (7) and an exhaust-heat-recovery generator (10); and, after the frequency of the exhaust-heat-recovery generator (10) reaches the frequency of a grid (40), the controller connects an exhaust-heat-recovery-side breaker (26) to supply power to the grid (40), and also sets the degree of opening of the steam-flow-volume adjusting valve (20) to a substantially fully-open position, thus, operating the steam turbine (7) depending on the frequency of the grid (40).

## Description

### {Technical Field}

The present invention relates to power-generation plant equipment provided with, in addition to a diesel engine for generating power, a steam turbine that is driven by steam obtained by recovering exhaust heat from this diesel engine, and to an operating method for the same.

### {Background Art}

There is known power-generation plant equipment using a diesel engine, which is provided with a steam turbine driven by using steam generated with exhaust heat from the diesel engine (for example, see Fig. 2 in Patent Literature 1 described below). A steam-turbine generator is driven by this steam turbine, and power is generated by recovering energy from exhaust heat. The steam-turbine generator for this exhaust-heat recovery is provided separately from a main diesel-engine generator connected to the diesel engine.

### {Citation List}

### {Patent Literature}

{PTL 1} Japanese Unexamined Patent Application, Publication No. 2004-190558 (Fig. 2)

### {Summary of Invention}

### {Technical Problem}

However, even though this is not clearly described in Patent Literature 1 described above, a dedicated speed-adjusting governor (steam regulating valve) and a controller therefor are usually required for the steam turbine in order to drive the steam-turbine generator at a rated rotational speed, which causes an increase in costs.

The present invention has been conceived in light of the above-described circumstances, and an object thereof is to provide power-generation plant equipment provided with a steam turbine operated by steam obtained using exhaust heat from a diesel engine and that does not cause an increase in costs even if an exhaust-heat-recovery generator driven by the steam turbine is provided, as well as to provide an operating method for the same.

### {Solution to Problem}

In order to solve the above-described problems, power-generation plant equipment of the present invention and an operating method for the same employ the following solutions.
Specifically, power-generation plant equipment according to a first aspect of the present invention is power-generation plant equipment including a diesel engine; a main generator that generates power by means of a driving force gained from the diesel engine and that supplies the power to a grid; a steam generating device that generates steam by recovering exhaust heat from exhaust gas expelled from the diesel engine; a steam turbine that is driven by the steam generated at the steam generating device; an induction-type exhaust-heat-recovery generator that generates power by means of a driving force gained from the steam turbine and that supplies the power to the grid; an exhaust-heat-recovery-side breaker that is disposed in a power cable between the exhaust-heat-recovery generator and the grid; a steam-flow-volume adjusting valve that is provided in a steam flow channel on the upstream side of the steam turbine; and a controller that controls the exhaust-heat-recovery-side breaker and the steam-flow-volume adjusting valve, wherein, during startup of the steam turbine, the controller increases a degree of opening of the steam-flow-volume adjusting valve from the closed position, thus increasing the frequencies of the steam turbine and the exhaust-heat-recovery generator; and, after the frequency of the exhaust-heat-recovery generator reaches the grid frequency, the controller connects the exhaust-heat-recovery-side breaker to supply power to the grid, and also sets the degree of opening of the steam-flow-volume adjusting valve to a substantially fully-open position, thus, operating the steam turbine depending on the grid frequency.

Exhaust heat from the diesel engine is recovered by the steam generating device, and the steam turbine is driven by the steam generated with the recovered exhaust heat. The exhaust-heat-recovery generator generates power by means of the driving force obtained from the steam turbine.
With the first aspect of the present invention, during startup of the steam turbine, the degree of opening of the steam-flow-volume adjusting valve is increased from the closed position, thus increasing the frequencies of the steam turbine and the exhaust-heat-recovery generator (induction generator); after the frequency of the exhaust-heat-recovery generator reaches the grid frequency, the exhaust-heat-recovery-side breaker is connected to supply power to the grid and, also, the degree of opening of the steam-flow-volume adjusting valve is set to the substantially fully-open position, thus operating the steam turbine depending on the grid frequency. Specifically, the steam turbine is controlled so that the rotational speed thereof is governed by the grid frequency. By doing so, the need for installing a speed-adjusting governor that adjusts the rotational speed of the steam turbine is eliminated, which makes it possible to reduce costs.
In particular, with the first aspect of the present invention, because the steam turbine is driven by the exhaust heat from the diesel engine, the output capacity of the steam turbine is smaller than that of the diesel engine (for example, 20 % or less, or, typically, about 10 %). Therefore, even if the rotational speed of the steam turbine is not controlled by a speed-adjusting governor, there is almost no effect on the main generator driven by the diesel engine.

In the power-generation plant equipment of the first aspect of the present invention, it is preferable that a pressure control valve be provided on the upstream side of the steam-flow-volume adjusting valve, wherein the controller closes the pressure control valve when the pressure in the steam flow channel drops to or below a predetermined value.

When the steam pressure drops to or below the predetermined value, the heat energy from exhaust heat recovery is assumed to have decreased due to a decrease in the output of the diesel engine. In such a case, the flow of steam is blocked by the pressure control valve to stop the operation of the steam turbine because performing exhaust-heat recovery cannot be expected to produce worthwhile effects.

In addition, in the power-generation plant equipment of the first aspect of the present invention, when the pressure in the steam flow channel reaches or exceeds the predetermined value, the controller preferably switches the flow of the steam toward a condenser provided on the downstream side of the steam turbine, bypassing the steam turbine.

In the case in which the steam pressure reaches or exceeds the predetermined value, the flow of steam is switched toward the condenser, bypassing the steam turbine, in order to protect the steam flow channel.

In addition a method of operating power-generation plant equipment according to a second aspect of the present invention is a method of operating power-generation plant equipment, which is provided with a diesel engine, a main generator that generates power by means of a driving force gained from the diesel engine and that supplies the power to a grid, a steam generating device that generates steam by recovering exhaust heat from exhaust gas expelled from the diesel engine, a steam turbine that is driven by the steam generated at the steam generating device, an induction-type exhaust-heat-recovery generator that generates power by means of a driving force gained from the steam turbine and that supplies the power to the grid, an exhaust-heat-recovery-side breaker that is disposed in a power cable between the exhaust-heat-recovery generator and the grid, a steam-flow-volume adjusting valve that is provided in a steam flow channel on the upstream side of the steam turbine, and a controller that controls the exhaust-heat-recovery-side breaker and the steam-flow-volume adjusting valve, wherein, during startup of the steam turbine, the controller increases a degree of opening of the steam-flow-volume adjusting valve from the closed position, thus increasing the frequencies of the steam turbine and the exhaust-heat-recovery generator; and, after the frequency of the exhaust-heat-recovery generator reaches the grid frequency, the controller connects the exhaust-heat-recovery-side breaker to supply power to the grid, and also sets the degree of opening of the steam-flow-volume adjusting valve to a substantially fully-open position, thus, operating the steam turbine depending on the grid frequency.

Exhaust heat from the diesel engine is recovered by the steam generating device, and the steam turbine is driven by the steam generated with the recovered exhaust heat. The exhaust-heat-recovery generator generates power by means of the driving force obtained from the steam turbine.
With the second aspect of the present invention, during startup of the steam turbine, the degree of opening of the steam-flow-volume adjusting valve is increased from the closed position, thus increasing the frequencies of the steam turbine and the exhaust-heat-recovery generator (induction generator); after the frequency of the exhaust-heat-recovery generator reaches the grid frequency, the exhaust-heat-recovery-side breaker is connected to supply power to the grid and, also, the degree of opening of the steam-flow-volume adjusting valve is set to the substantially fully-open position, thus operating the steam turbine depending on the grid frequency. Specifically, the steam turbine is controlled so that the rotational speed thereof is governed by the grid frequency. By doing so, the need for installing a speed-adjusting governor that adjusts the rotational speed of the steam turbine is eliminated, which makes it possible to reduce costs.
In particular, with the second aspect of the present invention, because the steam turbine is driven by the exhaust heat from the diesel engine, the output capacity of the steam turbine is smaller than that of the diesel engine (for example, 20 % or less, or, typically, about 10 %). Therefore, even if the rotational speed of the steam turbine is not controlled by a speed-adjusting governor, there is almost no effect on the main generator driven by the diesel engine.

### {Advantageous Effects of Invention}

With the present invention, the need for a speed-adjusting governor that adjusts the rotational speed of a steam turbine is eliminated by controlling the rotational speed of the steam turbine so as to be governed by the grid frequency. By doing so, it is possible to reduce costs.

### {Brief Description of Drawing}

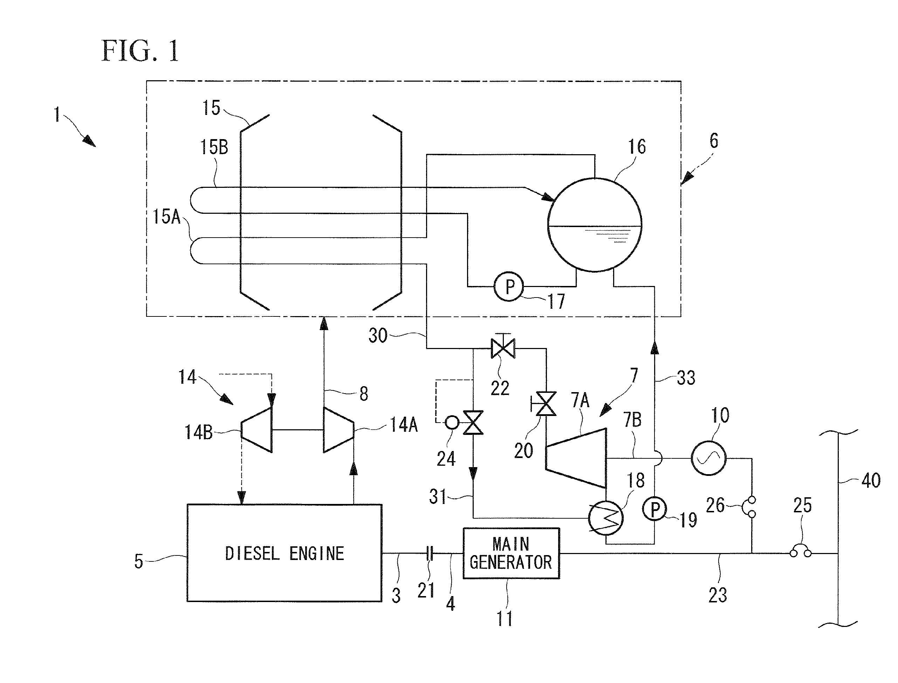

{Fig. 1} Fig. 1 is a diagram showing, in outline, the configuration of power-generation plant equipment of the present invention.

### {Description of Embodiment}

An embodiment of power-generation plant equipment of the present invention and an operation method thereof will be described below with reference to the drawing.
As shown in Fig. 1, power-generation plant equipment 1, which is installed, for example, on land, includes a diesel engine 5, a main generator 11 connected to a diesel-engine output shaft 3, a steam generating device 6 that generates steam with high-temperature exhaust gas expelled from the diesel engine 5, a steam turbine 7 driven by the steam generated at the steam generating device 6, and an exhaust-heat-recovery generator 10 that generates power by being driven by the steam turbine 7.

The diesel engine 5 has a supercharger 14 and an exhaust gas pipe 8. The diesel engine 5 is directly connected to one end of the diesel-engine output shaft 3, which is its output shaft, and rotationally drives the diesel-engine output shaft 3. A generator input shaft 4, which serves as an input shaft of the main generator 11, is fixed at the other end of the diesel-engine output shaft 3 via a coupling 21.
The supercharger 14 provided in the diesel engine 5 includes a turbine 14A and a compressor 14B that are provided on the same shaft. The exhaust gas expelled from the diesel engine 5 is guided to the turbine 14A to rotationally drive it. When the turbine 14A is driven, the compressor 14B provided on the same shaft thereas is rotated to compress air. The compressed air is supplied to the diesel engine 5 as combustion air.
The exhaust gas pipe 8 is connected to the downstream side of the turbine 14A, and the exhaust gas that has performed work at the turbine 14A is guided to the exhaust-gas economizer 15 via the exhaust gas pipe 8.
The diesel engine 5 is provided with a speed-adjusting governor (not shown) that adjusts the output rotational speed thereof. The speed-adjusting governor adjusts a fuel input level, thus adjusting the output rotational speed. The speed-adjusting governor is controlled by a controller (not shown).

The main generator 11 generates power by means of the rotational output transmitted from the diesel-engine output shaft 3 to the generator input shaft 4. The power output from the generator 11 is guided to a grid 40 via an output power cable 23 and a main breaker (for example, an ACB (automatic circuit breaker)) 25.

The steam generating device 6 is provided with an exhaust-gas economizer 15 and a gas-liquid separator 16.
The exhaust-gas economizer 15 has a superheater 15A and an evaporator 15B in a flue thereof. The superheater 15A and the evaporator 15B are mounted in the exhaust-gas economizer 15 sequentially from bottom to top (upstream to downstream in the flow of the exhaust gas) so as to be parallel to each other. The high-temperature exhaust gas flows in the flue of the exhaust-gas economizer 15 to be released into the atmosphere via a chimney (not shown) connected on the downstream side thereof. Steam from a top portion of the gas-liquid separator 16 is guided to the superheater 15A. Water from a bottom portion of the gas-liquid separator 16 is guided to the evaporator 15B.
The gas-liquid separator 16 contains the water and steam vertically separated therein. The gas-liquid separator 16 is supplied with water from a condensed-water pipe 33. The water in the gas-liquid separator 16 is guided to the evaporator 15B in the exhaust-gas economizer 15 by means of a boiler-water circulation pump 17. Wet steam containing moisture from the evaporator 15B in the exhaust-gas economizer 15 is guided to the gas-liquid separator 16 to be separated into water and steam. The separated steam is guided to the superheater 15A in the exhaust-gas economizer 15 to be turned into superheated steam.

The steam turbine 7 includes a turbine 7A, a turbine output shaft 7B, and a steam-flow-volume adjusting valve 20. The turbine 7A is rotationally driven by the steam, which causes the turbine output shaft 7B connected to the turbine 7A to be rotated. The steam-flow-volume adjusting valve 20, which is provided in a superheated-steam pipe (steam flow channel) 30 between the exhaust-gas economizer 15 and the steam turbine 7, is configured so that it adjusts the flow volume of the steam supplied to the steam turbine 7 from the superheater 15A in the exhaust-gas economizer 15; it can be fully closed and fully opened; and the degree of opening thereof can also be adjusted at intermediate positions between the fully closed and fully open positions. The steam-flow-volume adjusting valve 20 is controlled by the controller (not shown).
The steam-flow-volume adjusting valve 20 serves as a steam stopping valve and as an accelerating valve for accelerating the rotational speed of the steam turbine 7 in accordance with a steam generation level. However, it does not serve as a governor for maintaining the rotational speed of the steam turbine 7 at a predetermined value. Therefore, the degree of opening of the steam-flow-volume adjusting valve 20 is mainly adjusted during startup when acceleration is needed to achieve a rotational speed for the grid.

A pressure control valve 22 is provided on the upstream side of the steam-flow-volume adjusting valve 20. The degree of opening of the pressure control valve is controlled by the controller (not shown), and the controller closes the pressure control valve 22 when the steam pressure in the superheated-steam pipe 30 drops to or below a predetermined value. This is to stop the operation of the steam turbine 7 by blocking the flow of the steam with the pressure control valve 22, because heat energy from exhaust-heat recovery is assumed to have decreased due to a decrease in the output of the diesel engine 5 when the steam pressure drops to or below the predetermined value, and because, in such a case, performing exhaust-heat recovery cannot be expected to produce worthwhile effects.

The steam that has completed work at the steam turbine 7 is guided to a condenser 18 to be liquefied by being condensed. Water liquefied at the condenser 18 is pumped by a condensed-water pump 19 to be guided to the gas-liquid separator 16 through the condensed-water pipe 33.

A bypass pipe 31, which is branched from the superheated-steam pipe 30 and leads to the condenser 18, is provided on the upstream side of the pressure control valve 22. A dump valve 24 is provided in the bypass pipe 31. Opening and closing of the dump valve 24 is controlled by the controller (not shown), and, when the steam pressure on the upstream side of the dump valve 24 reaches or exceeds a predetermined value, the controller opens the dump valve 24 and closes the pressure control valve 22 and the steam-flow-volume adjusting valve 20. By opening the dump valve 24, the superheated steam in the superheated-steam pipe 30 is guided to the condenser 18, bypassing the turbine 7A. Because the steam pressure in the superheated-steam pipe 30 becomes excessively large when the steam turbine 7 is stopped (for example, due to tripping or the like), for the purpose of device protection, the steam flow channel is switched in this way so that the steam escapes to the condenser via the bypass pipe 31.

The exhaust-heat-recovery generator 10 is an induction generator and is rotated by the driving force of the steam turbine 7 obtained via the turbine output shaft 7B. The power output from the exhaust-heat-recovery generator 10 is guided to the output power cable 23 on the main generator 11 side via an exhaust-heat-recovery-side breaker (for example, an ACB (automatic circuit breaker)) 26.

Next, an operating method for the power-generation plant equipment 1 described above will be described.
Once the operation of the diesel engine 5 is started, the diesel-engine output shaft 3, which is directly connected to the diesel engine 5, and the generator input shaft 4 of the main generator 11 are rotated. The diesel engine 5 is operated at a rated rotational speed (for example, about 514 rpm), so that the generator 11 is operated in a manner suitable for the power specifications required for the grid 40. The speed-adjusting governor is controlled by, for example, the controller, which obtains the rotational speed of the generator 11 to perform feedback control, and, by doing so, the rotational speed of the diesel engine 5 is controlled.
The power output from the generator 11 is sent to the grid 40 via the output power cable 23 and the main breaker 25.

The exhaust gas expelled from the diesel engine 5 is guided to the exhaust-gas economizer 15 via the exhaust-gas pipe 8. When passing through the exhaust-gas economizer 15, the exhaust gas undergoes heat exchange at the superheater 15A and the evaporator 15B. Water in the evaporator 15B turns into wet steam by undergoing heat exchange with the exhaust gas. The wet steam is guided to the gas-liquid separator 16, where the moisture is separated therefrom, and is subsequently guided to the superheater 15A in the exhaust-gas economizer 15. The steam in the superheater 15A is turned into superheated steam by undergoing heat exchange with the exhaust gas.
The superheated steam is guided to the superheated-steam pipe 30. The superheated steam guided to the superheated-steam pipe 30 is supplied to an inlet side of the steam turbine 7 via the steam-flow-volume adjusting valve 20. The steam turbine 7 is rotationally driven by the steam guided thereto. The rotation of the steam turbine 7 causes the turbine output shaft 7B to be rotated. The exhaust-heat-recovery generator 10 generates power by gaining the rotational force of the turbine output shaft 7B. The generated power output from the exhaust-heat-recovery generator 10 is sent to the output power cable 23 via the exhaust-heat-recovery-side breaker 26 to be finally supplied to the grid 40.

The operation during startup of the steam turbine 7 is as follows.
First, before startup, the steam-flow-volume adjusting valve 20 and the pressure control valve 22 are fully closed and the dump valve 24 is fully opened.
When steam is generated at the steam generating device 6 and superheated steam supplied from the superheated-steam pipe 30 reaches or exceeds a predetermined amount, the steam-flow-volume adjusting valve 20 is slightly opened from the fully-closed position. At this time, the pressure control valve 22 is opened and the dump valve 24 is closed. Then, the degree of opening of the steam-flow-volume adjusting valve 20 is gradually increased to accelerate the rotational speed of the steam turbine 7. The rotational speed of the turbine output shaft 7B is increased by doing so, thus increasing the frequency of the exhaust-heat-recovery generator 10. When the frequency of the exhaust-heat-recovery generator 10 reaches the frequency of the grid 40, the exhaust-heat-recovery-side breaker is switched from a blocking state to the on state (to make an electrical connection). By doing so, the power output from the exhaust-heat-recovery generator 10 is supplied to the output power cable 23 to be guided to the grid 40 via the main breaker 25. Subsequently, the controller fully opens the steam-flow-volume adjusting valve 20 and basically performs no further adjustment of the degree of opening thereof (in other words, the degree of opening is fixed at the fully-open position). Accordingly, the steam turbine 7 is operated depending on the frequency of the grid 40.

As described above, the power-generation plant equipment of this embodiment and the operation method thereof afford the following advantages.
During startup of the steam turbine 7, the degree of opening of the steam-flow-volume adjusting valve 20 is increased from the closed position, thus increasing the frequency of the exhaust-heat-recovery generator 10; after the frequency of the exhaust-heat-recovery generator reaches the frequency of the grid 40, the power is supplied to the grid by connecting the exhaust-heat-recovery-side breaker 26 and, also, the degree of opening of the steam-flow-volume adjusting valve 20 is set to the fully-open position, thus, operating the steam turbine 7 depending on the frequency of the grid 40. Specifically, the steam turbine 7 is controlled so that the rotational speed thereof is governed by the frequency of the grid 40. By doing so, the need for installing a speed-adjusting governor that adjusts the rotational speed of the steam turbine 7 is eliminated, which makes it possible to reduce costs.
In particular, because the steam turbine 7 is driven by the exhaust heat from the diesel engine 5, the output capacity of the steam turbine 7 is smaller than that of the diesel engine 5 (for example, 20 % or less, or, typically, about 10 %). Therefore, even if the rotational speed of the steam turbine 7 is not controlled by a speed-adjusting governor, there is almost no effect on the main generator 11 driven by the diesel engine 5.

Note that, although the power-generation plant equipment 1 has been described with an example of a land-based installation, the present invention is not limited thereto.
In addition, although the output capacity ratio of the steam turbine 7 relative to the diesel engine 5 is assumed to be, for example, 20 % or less, or, typically, about 10 %, the present invention is not limited thereto; the present invention can be applied so long as the output capacity of the steam turbine 7 is smaller than that of the diesel engine 5, where the output volume ratio is preferably less than 50 %.

### {Reference Signs List}

| | |
|---|---|
| 1 | power-generation plant equipment |
| 5 | diesel engine |
| 6 | steam generating device |
| 7 | steam turbine |
| 10 | exhaust-heat-recovery generator |
| 11 | main generator |
| 20 | steam-flow-volume adjusting valve |
| 22 | pressure control valve |
| 24 | dump valve |
| 40 | grid |

## Claims

1. Power-generation plant equipment comprising:
a diesel engine;
a main generator that generates power by means of a driving force gained from the diesel engine and that supplies the power to a grid;
a steam generating device that generates steam by recovering exhaust heat from exhaust gas expelled from the diesel engine;
a steam turbine that is driven by the steam generated at the steam generating device;
an induction-type exhaust-heat-recovery generator that generates power by means of a driving force gained from the steam turbine and that supplies the power to the grid;
an exhaust-heat-recovery-side breaker that is disposed in a power cable between the exhaust-heat-recovery generator and the grid;
a steam-flow-volume adjusting valve that is provided in a steam flow channel on the upstream side of the steam turbine; and
a controller that controls the exhaust-heat-recovery-side breaker and the steam-flow-volume adjusting valve,
wherein, during startup of the steam turbine, the controller increases a degree of opening of the steam-flow-volume adjusting valve from the closed position, thus increasing frequencies of the steam turbine and the exhaust-heat-recovery generator; and, after the frequency of the exhaust-heat-recovery generator reaches the grid frequency, the controller connects the exhaust-heat-recovery-side breaker to supply power to the grid, and also sets the degree of opening of the steam-flow-volume adjusting valve to a substantially fully-open position, thus, operating the steam turbine depending on the grid frequency.

2. Power-generation plant equipment according to Claim 1, further comprising:
a pressure control valve provided on the upstream side of the steam-flow-volume adjusting valve,
wherein the controller closes the pressure control valve when the pressure in the steam flow channel drops to or below a predetermined value.

3. Power-generation plant equipment according to Claim 1 or 2, wherein, when the pressure in the steam flow channel reaches or exceeds the predetermined value, the controller switches the flow of the steam toward a condenser provided on the downstream side of the steam turbine, bypassing the steam turbine.

4. A method of operating power-generation plant equipment, which is provided with
a diesel engine;
a main generator that generates power by means of a driving force gained from the diesel engine and that supplies the power to a grid;
a steam generating device that generates steam by recovering exhaust heat from exhaust gas expelled from the diesel engine;
a steam turbine that is driven by the steam generated at the steam generating device;
an induction-type exhaust-heat-recovery generator that generates power by means of a driving force gained from the steam turbine and that supplies the power to the grid;
an exhaust-heat-recovery-side breaker that is disposed in a power cable between the exhaust-heat-recovery generator and the grid;
a steam-flow-volume adjusting valve that is provided in a steam flow channel on the upstream side of the steam turbine; and
a controller that controls the exhaust-heat-recovery-side breaker and the steam-flow-volume adjusting valve,
wherein, during startup of the steam turbine, the controller increases a degree of opening of the steam-flow-volume adjusting valve from the closed position, thus increasing frequencies of the steam turbine and the exhaust-heat-recovery generator; and, after the frequency of the exhaust-heat-recovery generator reaches the grid frequency, the controller connects the exhaust-heat-recovery-side breaker to supply power to the grid, and also sets the degree of opening of the steam-flow-volume adjusting valve to a substantially fully-open position, thus, operating the steam turbine depending on the grid frequency.
